## Europäisches Patentamt

## European Patent Office

## Office européen des brevets

(11) Veröffentlichungsnummer: **0 394 864**
**A1**

(12) **EUROPÄISCHE PATENTANMELDUNG**

(21) Anmeldenummer: **90107515.0**

(22) Anmeldetag: **20.04.90**

(51) Int. Cl.5: **C02F 1/28**

(30) Priorität: **26.04.89 DE 3913709**

(43) Veröffentlichungstag der Anmeldung:
**31.10.90 Patentblatt 90/44**

(84) Benannte Vertragsstaaten:
**AT BE DE FR NL**

(71) Anmelder: **RHEINBRAUN Aktiengesellschaft**
**Stüttgenweg 2**
**D-5000 Köln 41(DE)**

(72) Erfinder: **Schmidt, Karin, Dr., Dipl.**
**Hohenstein 21a**
**D-5600 Wuppertal 2(DE)**
Erfinder: **Dolkemeyer, Wilfried, Dr.-Ing., Dipl.**
**Liebigstrasse 14**
**D-5047 Wesseling(DE)**
Erfinder: **Lenz, Uwe, Dr., Dipl.**
**Heideweg 7**
**D-5020 Frechen(DE)**
Erfinder: **Faber, Wolfgang, Dr., Dipl.-Chem.**
**Im Rosengarten 19**
**D-5020 Frechen(DE)**

(74) Vertreter: **Koepsell, Helmut, Dipl.-Ing.**
**Mittelstrasse 7**
**D-5000 Köln 1(DE)**

(54) **Verfahren zur Entfernung von anorganischen Schwefelverbindungen aus wässrigen Flüssigkeiten.**

(57) Das erfindungsgemäße Verfahren betrifft die Entfernung von anorganischen Schwefelverbindungen aus wässrigen Flüssigkeiten, durch Behandeln derselben mit Braunkohlenkoksen und/oder Aktivkohlen aus Braunkohle.

EP 0 394 864 A1

## Verfahren zur Entfernung von anorganischen Schwefelverbindungen aus wässrigen Flüssigkeiten

Das erfindungsgemäße Verfahren betrifft die Entfernung von anorganischen Schwefelverbindungen aus wässrigen Flüssigkeiten, durch Behandeln derselben mit Braunkohlenkoksen und/oder Aktivkohlen aus Braunkohle.

Die Verwendung von Koksen und Aktivkohlen zur Abwasserreinigung ist seit langem bekannt. So werden beispielsweise Koks und Aktivkohle als Filtermasse zum Abscheiden feinverteilter Feststoffe in Abwasser eingesetzt.

Kokse und Aktivkohlen eignen sich auch als Adsorbens für gelöste organische Verunreinigungen.
So wird in "Herdofenkoks aus Braunkohle - konventionelle Einsatzgebiete und zukünftige Einsatzmöglichkeiten" in Erdöl, Erdgas, Kohle, 102 S.143/144 (1986) die Verwendung von Braunkohlenkoks für diesen Zweck beschrieben. Braunkohlenkoks eignet sich gemäß dieser Veröffentlichung auch sehr gut als Zusatz zu biologischen Kläranlagen, da sich Kompaktflocken mit der Biomasse bilden mit verbesserten Sedimentationseigenschaften. Ein besonderes Problem der Abwasserreinigung stellt die Entfernung anorganischer Schwefelverbindungen, wie Sulfiden, Di-und Polysulfiden dar.

Ein Verfahren zur Aufarbeitung sulfidhaltiger Abwässer ist in DE-PS 26 10 638 beschrieben, bei dem das Abwasser in mehreren Stufen mit $CO_2$ unter Druck behandelt wird. Bei stufenweisem Entspannen entweicht das $CO_2$ gemeinsam mit dem Schwefelwasserstoff.
Durch das apparativ aufwendige Verfahren läßt sich $H_2S$ bis auf 15 mg/l Wasser entfernen.

In EP 0 063 829 ist ein Verfahren zur Entfernung von Dialkyldisulfiden aus Abwässern durch katalytische Oxidation mit Peroxidverbindungen beschrieben.

In DE-PS 32 45 139 wird eine Methode zum Entfernen von $H_2S$ und Eisensulfid aus Abwasser durch Zugabe eines Formaldehyd-Acrolein-Kondensats offenbart. Nach mehrtägigem Stehen wird das Sulfid an das Kondensat gebunden und kann mit diesem entfernt werden.

In Anbetracht der Entwicklung im Abwasserbereich wird es immer dringender, verbesserte Verfahren zu entwickeln, die auf wirtschaftliche Weise und mit hoher Selektivität die gelösten Verunreinigungen, die sowohl für Pflanzen als auch Tier und Mensch schädlich sind, aus Wasser in dem sie enthalten sind, zu entfernen. Es kann sich hierbei sowohl um Industrieabwässer, als auch um Oberflächengewässer schlechthin, wie Fluß-, Teich-, See- und auch Meerwasser sowie insbesondere um Grundwasser handeln. So sind Deponiesickerwässer, wie allgemein bekannt ist, zu einem zunehmenden Risiko für das Grundwasser geworden.

Der Anmelderin ist es nunmehr gelungen ein Verfahren zu entwickeln, mit dem auf sehr wirtschaftliche Weise anorganische Sulfide, Di- und Polysulfide einschließlich der Wasserstoffverbindungen aus wässrigen Flüssigkeiten abgetrennt werden können, dadurch gekennzeichnet, daß die mit den Schwefelverbindungen verunreinigten wässrigen Flüssigkeiten mit Luft und/oder Sauerstoff im Kontakt mit Braunkohlenkoks(en) und/oder Aktivkohle(n) auf Braunkohlebasis, behandelt werden.

Braunkohlen entstammen bekanntlich überwiegend dem Tertiär und sind demgemäß vergleichsweise geologisch junge Kohlen mit niedrigem Inkohlungsgrad. Sie sind reich an bituminösen Stoffen wie Huminsäuren, die sich in Alkalilauge mit tiefbrauner Farbe lösen.

Sie können bis zu 65 Gew.-% Wasser enthalten und werden gewöhnlich im Tagebau auf sehr wirtschaftliche Weise mit Schaufelbaggern abgebaut. Aus Braunkohle kann man auf verschiedene Weise Kokse herstellen.

Beispiele sind der durch Schwelen bei ca. 600 °C gewinnbare sog. Grudekoks; durch Verkoken bei 1000 - 1200 °C erhält man den sog. Braunkohlen-Hochtemperaturkoks mit einer spezifischen Oberfläche von etwa 75 - 250 m²/g.

Ein weiterer durch seine Härte und Druckfestigkeit sehr wertvoller Braunkohlenkoks ist der sog. Herdofenkoks im allgemeinen mit einer spezifischen Oberfläche von 250-350 m²/g.

Bei der Verkokung im Herdofen wird feingemahlene und vorgetrocknete Braunkohle über Fallrohre am Außenrand der Herdofenplatte aufgegeben und wandert unter deren ständiger Drehung und der Einwirkung der feststehenden Rührschaufeln langsam zur Mitte, von wo aus der fertige Koks ausgetragen wird. Beim Durchgang treten die flüchtigen Bestandteile aus der Braunkohlen-/Koksschüttung aus und werden unter Luftzufuhr von außen oberhalb der Koksschüttung teilweise verbrannt. Der Verkokungsprozeß wird über diese Verbrennung eines Teiles der flüchtigen Bestandteile geführt, das heißt, es wird unter Luftmangel gearbeitet, so daß jeweils nur eine solche Menge an flüchtigen Bestandteilen verbrennt, wie zur Aufrechterhaltung der Verkokungstemperatur benötigt wird. Das Verkoken von Braunkohle im Herdofen erfolgt im allgemeinen ohne Zufuhr von Wasserdampf oder Wasser von außen, da der Wassergehalt der vorgetrockneten Braunkohle so eingestellt werden kann, daß Koks mit den gewünschten Eigenschaften erhalten wird. Erfindungsgemäß besonders bewährt hat sich aus rheinischer Braunkohle hergestellter Herdofenkoks. Die genannten Braunkohlenkoksqualitäten sind beispielhaft, jedoch nicht als limitierend anzusehen.

Aktivkohlen oder aufgrund ihrer großen Oberfläche auch Adsorptionskohlen genannt, werden häufig aus Holz gewonnen, jedoch auch Braunkohle ist ein geeignetes Ausgangsmaterial. Es gibt zahlreiche Verfahren zur Herstellung von Aktivkohlen. Beispielhaft seien Schwelverfahren mit anschließender Behandlung mit Wasserdampf, Erhitzen von fein verteilten Einsatzmaterialien in Gegenwart von oxidierenden Gasen in der Wirbelschicht, Behandeln von verkohlter Substanz mit auf ca. 1000 °C überhitztem Wasserdampf u.a. genannt, Aktivkohlen, die nach diesem oder anderen Verfahren aus Braunkohle hergestellt sind und auch ggfs. auf dem Markt erhältlich sind, eignen sich für das erfindungsgemäße Verfahren.

Vor der Behandlung der die Verunreinigungen enthaltenden Flüssigkeit mit dem aus Braunkohle hergestellten Koks und/oder der Aktivkohle werden Koks bzw. Aktivkohle vorteilhafterweise entgast, d.h. das an der Oberfläche bzw. in den Poren haftende Gas, im allgemeinen Luft, wird zumindest teilweise jedoch bevorzugt möglichst vollständig entfernt. Dies geschieht in einer bevorzugten Ausführungsform durch Evakuieren. Das Evakuieren kann auf die Weise erfolgen, daß an den den Koks und/oder die Aktivkohle enthaltenden Behälter Vakuum angelegt wird und daß man anschließend die Flüssigkeit, vorzugsweise Wasser in den Koks bzw. die Aktivkohle strömen läßt. Man kann jedoch auch zunächst den Koks und/oder die Aktivkohle mit der Flüssigkeit benetzen bzw. bedecken und anschließend Vakuum anlegen. Das Entfernen des an dem Koks bzw. der Aktivkohle haftenden Gases ist eine wichtige bevorzugte Ausführungsform der vorliegenden Erfindung, wie aus den durchgeführten Versuchen hervorgeht, obgleich auch nicht entgaster Koks gute Ergebnisse ergibt. Sehr vorteilhaft kann die Entgasung durch Behandeln mit Dampf oder heißem Wasser oder beidem sein, auch in Kombination mit einer Entgasung durch Evakuieren. Ebenso kann die Entgasung und Mischung mit Wasser in der Weise erfolgen, daß fein verteilter Koks oder Aktivkohle in den Wasserstrahl einer Wasserstrahlpumpe eingesaugt werden.

Ferner kann durch Wasser, -dies kann auch zu reinigendes Abwasser sein,- das für eine genügend lange Zeit im Kreislauf mit dem Koks bzw. der Aktivkohle in Kontakt gebracht wird, die Entgasung erfolgen.

Die zu reinigende Flüssigkeit ist selbstverständlich bevorzugt Wasser. Es ist allgemein bekannt, daß die Entfernung von sulfidischen Schwefelverbindungen aus Wasser ein wichtiges Umweltproblem ist. Jedoch kann das erfindungsgemäße Verfahren auch für Gemische von Wasser mit anderen in Wasser löslichen Flüssigkeiten mit Vorteil angewandt werden, wie weiter unten noch näher erläutert wird.

Ein besonderer Vorteil von Braunkohlenkoks ist die Verfügbarkeit desselben und die hohe Wirtschaftlichkeit. Dies gilt insbesondere für Herdofenkoks, der um wenigstens einen Faktor 10 preisgünstiger ist als Aktivkohle.

Das Verfahren ist auf sehr einfache Weise durchführbar, indem man das zu reinigende Wasser mit dem Koks und/oder der Aktivkohle in der Weise in Kontakt bringt, daß man Koks bzw. Aktivkohle als festes Bett anordnet und das Wasser über dieses mit einer bestimmten Verweilzeit fließen läßt. Hierbei kann das Wasser von unten nach oben durch das Bett gedrückt werden oder von oben nach unten durch dasselbe fließen. Auch ein wanderndes Festbett, ein Wirbelbett und andere Formen des Kontaktes zwischen Flüssigkeit und Adsorptionsmitteln sind möglich, wie beispielsweise im Suspensionsbett. Ebenso kann Luft und/oder Sauerstoff im Gleichstrom oder Gegenstrom mit dem über den Koks bzw. die Aktivkohle fließenden Wasser in Kontakt gebracht werden.

Bei der Reinigung des Wassers wird bevorzugt bei einem pH von > 4 und besonders bevorzugt bei einem pH von > 5 in der zu reinigenden Flüssigkeit, insbesondere in Wasser gearbeitet. Der pH kann jedoch auch niedriger oder höher sein. Der pH in der gereinigten Flüssigkeit muß jedoch nicht während der ganzen Reinigungsperiode auf diesen Werten gehalten werden, sondern man kann den pH während des Reinigungsbetriebs auf höhere Werte wie beispielsweise auf 8, ansteigen lassen. Jedoch auch höhere pH-Werte sind möglich.

Grundsätzlich können Koks oder Aktivkohle erfindungsgemäß mit sehr unterschiedlichen Korngrößen eingesetzt werden, wie z.B. von > 0 bis 100 mm. Aus technischen und wirtschaftlichen Gründen sind jedoch bestimmte Korngrößen bevorzugt, nämlich > 0,01 bis 20 mm und besonders bevorzugt von > 0,01 - 10 mm. Übliche Feinkokssorten liegen z.B. etwa zwischen 1,2 - 5 mm, Feinstkokssorten zwischen 0,1 - 1,5 mm. Alle diese Korngrößen, auch Koksstäube sind einsetzbar und liefern sehr gute Ergebnisse. Es ist zu berücksichtigen, daß die Korngrößen in zerkleinerten und gesiebten Produkten einer Gaus'schen Verteilung unterliegen, d.h. eine mittlere Korngröße in den angegebenen Grenzen überwiegt, jedoch in kleinen Mengen liegen auch kleinere und größere Körnungen vor.

Im praktischen Einsatz kann es von Vorteil sein, im unteren Bett große Korngrößen zu verwenden bis zu 100 mm, jedoch im oberen Teil kleine Korngrößen. Auch die umgekehrte Anordnung kann ggfs. von Wichtigkeit sein, daß ein Teil der Verunreinigungen im oberen groben Teil abgefangen wird und die restlichen Verunreinigungen im feinkörnigen unteren Teil.

Die Verweilzeit der die sulfidischen Verunreinigungen enthaltenden wässrigen Flüssigkeit in der Koksschicht kann erfindungsgemäß 1 min. bis 10 Stunden betragen, bevorzugt 2 min. bis 3 Stunden und besonders bevorzugt 2 min. bis 2 Stunden. Pro 10 mg in der wässrigen Flüssigkeit gelöstem sulfidischen Schwefel werden 0,2 bis 100 L Luft bzw. Sauerstoff, bevorzugt 0,5 - 50 L und besonders bevorzugt 0,5 - 30 L durch die Koksschicht geleitet.

Erfindungsgemäß können auch Lösungsmittelgemische gereinigt werden, die beispielsweise neben Wasser in weiten Grenzen variierbare Mengen an organischen Lösungsmitteln wie Dimethylsulfoxid, Acetonitril, Dimethylformamid, Alkohole, Keton, N-Methylpyrrolidon, Carbonsäuren und andere enthalten.

Von den Braunkohlekoksen ist der Herdofenkoks erfindungsgemäß bevorzugt. Dieser ist sehr preiswert verglichen mit anderen Koksarten und mit Aktivkohle und zeigt hervorragende Adsorptionseigenschaften für die genannten sulfidischen Verunreinigungen.

Nach Beladung mit den Verunreinigungen kann der Koks deponiert werden oder verbrannt werden, wobei das bei der Verbrennung entstehende $SO_2$ nach üblichen Methoden aus dem Rauchgas entfernt werden kann.

Herdofenkoks wird im allgemeinen als sog. Feinkoks mit einer Korngröße von 1,25 - 5 mm, als Feinstkoks mit einer Korngröße von 0,1 - 1,5 mm und als Koksstaub mit einer Korngröße von < 0,4 mm gehandelt.

Sämtliche Korngrößen können erfindungsgemäß wie bereits dargelegt, einzeln oder als Gemische eingesetzt werden, wobei jedoch bei Einsatz von Koksstaub allein ebenfalls vorzugsweise mit dem Wasser eine innige Vermischung durch beispielsweise Rühren erfolgen sollte.

Zur weiteren Erläuterung der vorliegenden Erfindung dienen folgende Versuche:
(In allen gereinigten Wasserproben wurde der Restgehalt an Sulfid photometrisch bestimmt.
Als Herdofenkoks wurde ein Produkt aus Rheinischer Braunkohle eingesetzt).

Die in den Beispielen beschriebenen Versuche wurden im allgemeinen in der Weise durchgeführt, daß
in eine Säule aus Glas, die mit einem Siebboden ausgestattet war, 15 g Herdofenkoks der Korngröße 0,1 - 1,5 mm eingefüllt wurden (Füllhöhe 10 cm). Die Säule wurde mit Leitungswasser aufgefüllt und bei 18 - 20 mm auf Wasserstrahlvakuum evakuiert (Evakuierungsdauer 15 min). Das Koksvolumen betrug 30 cm³. Oder es wurde der feinverteilte Koks mittels einer Wasserstrahlpumpe eingesaugt und mit Wasser vermischt. Anschließend ließ man den Koks absitzen. Auch die Methode der Behandlung mit heißem Dampf oder die Kreislauffahrweise wurden in einigen Fällen, insbesondere bei den größeren Geräten eingesetzt. Für die technische Durchführung des erfindungsgemäßen Verfahrens eignet sich das in der deutschen Patentanmeldung Nr. P 38 23 127.1 von der gleichen Anmelderin angemeldete Verfahren. Kennzeichnendes Merkmal der vorliegenden Erfindung ist jedoch nicht die apparative Durchführung, sondern der Einsatz von Koksen und Aktivkohle auf Braunkohlebasis, für die Entfernung der genannten sulfidischen Verunreinigungen.

Beispiel 1

Ein filtriertes Abwasser, das 70 mg/L Natriumsulfid enthielt, wurde mit einem pH von 11 zur Reinigung eingesetzt. Der Durchsatz pro Stunde betrug 200 ml (Verweilzeit: 9 min.). Das Abwasser floß von oben nach unten über die Koksfüllung. Von unten wurden 6 L Luft/h entgegengeleitet.

Nach 250 Stunden wurde der Versuch abgebrochen, ohne daß die Koksfüllung erschöpft war. Die Analyse einer nach 250 Stunden gezogenen Probe ergab < 0,1 mg $S^{2-}$/L Wasser. Es wurden 21 mg $S_2O_3^{--}$ und 50 mg $SO_4^{--}$ pro L gebildet.

Beispiel 2

Ein filtriertes Abwasser, das 26 mg CaS/L Wasser enthielt, wurde mit einem pH von 11 über den Herdofenkoks geleitet. Der Durchsatz pro Stunde betrug 100 ml (Verweilzeit: 18 min.). Das Abwasser floß von oben nach unten über die Koksfüllung. Von unten wurden 2 L Luft/h entgegengeleitet.

Nach 250 Stunden wurde der Versuch abgebrochen. Die Analyse einer nach 250 Stunden gezogenen Probe ergab < 0,1 mg $S^{2-}$/L Wasser. Es wurden 7 mg $S_2O_3^{--}$ und 22 mg $SO_4^{--}$/L gebildet.

Beispiel 3

Ein filtriertes Gemisch von 50 Teilen Dimethylsulfoxid und 50 Teilen Wasser, das 100 mg $Na_2S_4$ ⇌ 2 $Na_2S_2$ + 2S enthielt, wurde bei pH 8 über Herdofenkoks geleitet.
Der Durchsatz pro Stunde betrug 30 ml (Verweilzeit: 60 min). Die Lösung wurde mit 100 L Luft pro Stunde von unten nach oben im Gleichstrom durch den Herdofenkoks geleitet.

Nach 250 Stunden wurde der Versuch abgebrochen. Die Analyse einer nach 250 Stunden gezogenen Probe ergab < 0,1 mg $S^{--}/S_4^{--}/S_2^{--}$ pro L. Es wurden 30,9 mg $S_2O_3^{--}$ und 167,7 mg $SO_4^{--}$ pro Liter gebildet.

Beispiel 4

Eine wässrige Lösung, die 242 mg $H_2S$/L enthielt, wurde mit der stöchiometrischen Menge NaOH (10%ig) neutralisiert.

Ein Rohr mit einem siebartigen Boden und einem Innendurchmesser von 25 cm wurde mit 24 L Herdofenkoks befüllt. Pro Stunde wurden 400 L der wässrigen Lösung von oben nach unten durch das Rohr geschickt (Verweilzeit: 3,6 min.). Im Gegenstrom strömten von unten nach oben 2.000 Liter Luft.

Nach 48 Stunden wurde der Versuch abgebrochen. Die Analyse ergab < 0,1 mg $S^{--}$.

Beispiel 5

Beispiel 1 wurde wiederholt. Es wurde jedoch mit einem Tieftemperaturbraunkohlenkoks mit einer spezifischen Oberfläche von 20 - 120 $m^2$/g gearbeitet.

Nach 250 Stunden Betriebszeit wurden 8,6 mg $S^{--}$/L ermittelt.

Beispiel 6

Beispiel 1 wurde wiederholt. Es wurde jedoch mit einer Aktivkohle aus Braunkohle mit 600 - 1200 $m^2$/g gearbeitet (Hydraffin, Fa. Lurgi).

Nach 250 Stunden wurden < 0,1 mg $S^{--}$/L ermittelt.

Die Beispiele zeigen, daß insbesondere mit Herdofenkoks auf Braunkohlebasis (Beispiele 1 - 4) sehr gute Ergebnisse erhalten werden.

Auch Aktivkohle auf Braunkohlebasis liefert ein sehr gutes Ergebnis (Beispiel 6).

Etwas weniger gut geeignet ist Tieftemperatur-Braunkohlekoks (Beispiel 5).

Die Verweilzeiten wurden in weiten Grenzen variiert, ohne daß schlechtere Ergebnisse erhalten wurden (Beispiele 1 - 4).

Die Ergebnisse sind unabhängig vom eingesetzten Sulfid. Dies zeigt der Einsatz von $Na_2S$ (Beispiele 1,4 und 6), von CaS (Beispiel 2) und von $Na_2S_4$ (Beispiel 3).

Auch durch pH-Änderung verschlechtern sich die Ergebnisse nicht (Beispiele 1,3 und 4). Schließlich kann auch die Luftmenge in weiten Grenzen variiert werden, ohne daß sich die Ergebnisse verschlechtern (Beispiele 1, 2, 3, 4).

Die Versuche wurden teilweise erst nach 250 Stunden abgebrochen, ohne daß der Koks bzw. die Aktivkohle erschöpft waren (Beispiele 1, 2, 3, 4, 5).

Beispiel 3 zeigt, daß auch Lösungsmittelgemische eingesetzt werden können.

Mit der vorliegenden Erfindung wird daher dem Fachmann ein Verfahren zur Verfügung gestellt, daß sich hervorragend eignet, auf wirtschaftliche Weise Sulfidverunreinigungen in Abwässern praktisch vollständig abzubauen.

**Ansprüche**

1. Verfahren zur Entfernung von in Form von anorganischen Sulfiden, Di- und Polysulfiden einschließlich der Wasserstoffverbindungen in wässrigen Flüssigkeiten gelösten Schwefelverbindungen, dadurch gekennzeichnet, daß die mit den Schwefelverbindungen verunreinigten wässrigen Flüssigkeiten mit Luft und/oder Sauerstoff im Kontakt mit Braunkohlenkoks(en) und/oder Aktivkohle(n) auf Braunkohlebasis, behandelt werden.

2. Verfahren nach Anspruch 1, dadurch gekennzeichnet, daß Braunkohlenkoks(e) eingesetzt werden.

3. Verfahren nach den Ansprüchen 1 und 2, dadurch gekennzeichnet, daß Herdofenkoks aus Braunkohle eingesetzt wird.

4. Verfahren nach den Ansprüchen 1 - 3, dadurch gekennzeichnet, daß die Verweilzeit der wässrigen Flüssigkeit in der Herdofenkoksschicht 1 mm bis 10 stunden, bevorzugt 2 min. bis 5 Stunden und besonders bevorzugt 2 min. bis 3 Stunden beträgt.

5. Verfahren nach den Ansprüchen 1 - 4, dadurch gekennzeichnet, daß pro 10 mg gelöstem sulfidischem Schwefel 0,2 - 100 L Luft, bevorzugt 0,5 - 50 L und besonders bevorzugt 0,5 -30 L durch den Herdofenkoks gemeinsam mit der wässrigen Flüssigkeit geleitet werden.

Europäisches
Patentamt

**EUROPÄISCHER RECHERCHENBERICHT**

Nummer der Anmeldung

EP 90 10 7515

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | DE-A- 623 479 (CARBO NORIT UNION)<br>* Seite 1, Zeile 62 - Seite 2, Zeile 13; Seite 2, Zeilen 81-96; Patentanspruch * <br>--- | 1-5 | C 02 F 1/28 |
| Y | KORRESPONDENZ ABWASSER, Band 36, Nr. 3, März 1989, Seiten 282-288, St. Augustin, DE; G.W. FELGENER et al.: "Mit Braunkohlenkoks wirkungsvoller reinigen – ein Beitrag zur weitergehenden Abwasserreinigung"<br>* Seite 283, rechte Spalte, Zeilen 4-16 *<br>--- | 1,2,4,5 | |
| Y | DE-A-3 036 504 (RHEINISCHE BRAUNKOHLENWERKE)<br>* Seite 3; Seite 5, Absatz 3, "Es liegt usw." *<br>----- | 3 | |
| | | | **RECHERCHIERTE SACHGEBIETE (Int. Cl.5)**<br><br>C 02 F |

Der vorliegende Recherchenbericht wurde für alle Patentansprüche erstellt

| Recherchenort | Abschlußdatum der Recherche | Prüfer |
|---|---|---|
| DEN HAAG | 12-07-1990 | KASPERS H.M.C. |